# EUROPEAN PATENT SPECIFICATION

(11) **EP 3 347 436 B1**
(45) Date of publication and mention of the grant of the patent: **14.06.2023**
(21) Application number: 16840329.3
(22) Date of filing: 02.06.2016
(51) Int. Cl.: C10B 47/44, C10B 53/02

(54) **FLASH PYROLYSIS REACTOR**
FLASH-PYROLYSEREAKTOR
RÉACTEUR DE PYROLYSE FLASH

(30) Priority: 07.09.2015 HU 1500404
(43) Date of publication of application: 18.07.2018
(73) Proprietor: Sárközi, Imre, 9028 Györ (HU); Zsenákné Sárközi, Virág, 8220 Balatonalmádi (HU); Turi, Tibor, 3700 Kazincbarcika (HU); Kincses, János, 2030 Érd (HU)
(72) Inventor: SÁRKÖZI, Imre, H-9028 Györ (HU)
(74) Representative: Danubia Patent & Law Office LLC
(86) International application number: PCT/HU2016/050022
(87) International publication number: WO 2017/042598

(56) References cited:
- CN-U- 203 866 250
- DE-B3-102012 103 034
- US-A- 4 123 332
- EGSGAARD H ET AL: "Techniques in gas-phase thermolyses", JOURNAL OF ANALYTICAL AND APPLIED PYROLYSIS, ELSEVIER BV, NL, vol. 11, 1 October 1987 (1987-10-01), pages 25-38, XP026525715, ISSN: 0165-2370, DOI: 10.1016/0165-2370(87)85016-7 [retrieved on 1987-10-01]

## Description

The present invention relates to a reactor, particularly to a flash pyrolysis reactor to process and convert organic materials in a closed system by thermal decomposition, in particular, by flash pyrolysis.

The flash pyrolysis reactor according to the invention can be used advantageously in the processing of organic substances, such as, but not limited to biomasses, municipal wastes, mixed plastic waste, rubber and highly viscous dense oils (such as black oils, shale oils, etc.).

In the processing performed by the flash pyrolysis reactor according to the invention, end products suitable for further utilization, e.g. high purity light oil fractions (such as gasoline, diesel oil) and/or oils with low kinematic viscosity at room temperature, hydrocarbon gases with one to four carbon atoms (C₁-C₄) and ash with high coke content are formed.

In the case of thermal decomposition (pyrolysis) processes known today, the degradation process of melting and non-melting organic wastes is carried out in the thermal decomposition reactor itself. To this end, said waste materials are preheated before being entered the reactor, and then are degraded within the reactor under an oxygen free environment and with subjecting to continuous heating. The efficiency/quality of degradation, i.e. decomposition of the substances into chemical elements is highly dependent on the amount of oxygen within the reactor, thus a decrease in the amount of oxygen in the reactor space is of primary importance. Said decrease is aimed to be achieved mostly mechanically and/or chemically. The mechanical way of reducing the amount of oxygen within the reactor is accomplished by applying a compression via a feeding screw, i.e. by squeezing out air from the reactor. To assist this process, the reactor and the feeding screw are both formed with a cross-section that gradually tapers along the direction of advancement of the substance, as disclosed e.g. in Hungarian patent application No. P1300709 and International Publication Pamphlet No. WO2011/131793 A2. The chemical way of reducing the amount of oxygen within the reactor is accomplished by feeding oxygen absorbing additives, preferably e.g. zeolites, into the reactor chamber together with the waste material to be processed, as disclosed e.g. in Hungarian patent No. HU-227,728 B1 or Hungarian patent application No. P1300709.

International Publication Pamphlet No. WO2011/131793 A2 discloses a method and an apparatus to produce hydrocarbons from organic feedstocks. In the apparatus, the liquid or molten feedstock comprised basically of waste plastics and waste oil is transferred, after being preheated, by a feeding screw into a reactor with vertical or horizontal axis, wherein a rotor equipped with blades mounted on a tubular shaft spreads the feedstock comprising both liquid and solid components in a thin layer (preferably of 0.5 to 3.5 mm in thickness) and preferably at a temperature of 390 to 420°C onto the inner surface of the wall of the reactor, wherein said wall is heated (in particular, from the outside, by means of a heating jacket). Over said wall, the feedstocks are decomposed into gaseous, liquid and solid phase fractions. Optionally, the reactor may also comprise a rotor with scraping blades to scrape off the solid products adhering to the inner surface of the wall of the reactor, and thus to continuously clean said wall of the reactor. The reactor can be implemented as either a tubular reactor with constant diameter or a reactor with a design that conically tapers along the direction of advancement of the feedstock within the reactor.

The rotor with blades mounted on a tubular shaft used in said apparatus occupies a relatively large portion of the internal space (considered to be useful from the point of view of reaction occurrence) of the reactor. Furthermore, the continuous jacket of the tubular shaft and the blades extending radially outwardly therefrom up to substantially the reactor wall divide the internal space of the reactor to smaller spatial regions that are interconnected with one another. That is, instead of a single, freely traversable continuous space, the internal space of the reactor forms a channel system of a zigzagged nature that is delimited dispersedly by walls formed by the blades. Therefore, the vapor/gas fraction produced by the thermal decomposition cannot expand in an unobstructed manner and flow freely; the tubular shaft and the blades provide resistance against the flow of the vapor/gas fraction, and thus said flow is impeded. This may pose a significant problem at high temperatures accompanied with a rapid or, optionally, an instantaneous thermal decomposition, because the pressure may significantly increase in each of such spatial regions, i.e. locally, and hence the mechanical load exerted on the elements of the reactor adjacent to any of said spatial regions may also significantly increase, which affects the life span of said reactor elements adversely.

The above disclosed apparatus is unfavoured when perfect thermal decomposition of organic feedstocks is to be performed by flash pyrolysis that takes place at generally rather high temperatures, that is, between about 500°C and 650°C.

DE Patent No. 102012103034 B3 discloses an apparatus for the complete thermal processing of organic waste, comprising a material feed, a reactor block, a tar precipitator, a gas scrubbing means, an evaporator and an activated coke treatment means. Said material feed comprises a funnel-shaped feeding device and a feed screw, whose outlet opens into the lower end of a main reactor in the reactor block. The material feed further comprises devices for introducing an aggregate mixture into the main reactor. Said reactor block comprises a combustion chamber, which is indirectly heated. The vertically disposed main reactor extends through the combustion chamber, in which an inner conveying device having a perforated conveyor screw is arranged. As a part of the reactor block, a coke reactor is arranged in parallel with the main reactor in the combustion chamber. In said coke reactor a further inner conveying device having a completely perforated conveyor screw is arranged. A transfer connects the main reactor and the coke reactor at their upper ends. As a further part of said reactor block, a gas reactor is arranged in the combustion chamber downstream to the main reactor and the coke reactor. Said gas reactor is parallel and perpendicular to the main reactor and the coke reactor. A third conveying device for coke is connected with the coke reactor through a tunnel above and opens at an upper end in a transfer line for a tar treatment reactor. Said tar precipitation comprises the mentioned transfer line, the tar treatment reactor and a tar distiller. A gas line for tar transport leads from the bottom of the tar distiller to the feeding device of the material feed. Said gas scrubbing means comprises a capacitor for the deposition of evaporated aggregate mixture in the tar distiller, a collecting container capturing the aggregate mixture, a catalytic treating pipe, a further capacitor, a gas scrubber and a gas dryer, which are connected with each other through respective gas lines. Said evaporator is connected with the outlet of the gas scrubbing means, in which a heating pipe is supplied with a part of the waste heat of the combustion chamber as the heating medium, and a further line, which leads from the evaporator to the activated coke treatment means. Said activated coke treatment means is located below the gas reactor and consists of a third conveying device, which begins at the lower discharge port of the coke reactor and opens into the activated coke treatment means.

The object of the present invention is to provide improvements over the deficiencies of the known solutions in the field of thermal decomposition of organic substances accomplished, in particular, by flash pyrolysis, as well as to alleviate or eliminate the technological difficulties arising when said solutions are utilized.

An aim of the present invention is to provide a reactor, wherein a vapor/gas fraction produced at a given location of the reactor all of a sudden can freely and rapidly expand over the entire inner volume of the reactor, and thus no local pressure spikes occur within the reactor.

In our studies we have come to the conclusion, that the efficiency of flash pyrolysis may enhance and substantially a perfect (nearly 100%) thermal decomposition of the organic substance content of a feedstock fed into the reactor can be achieved by flash pyrolysis, if the organic substance to be processed as the feedstock is overheated to a temperature between about 350°C and 500°C and simultaneously with its introduction into the reactor in the overheated state it is spread as a thin film (of 1-1.5 mm, at most 2 mm in thickness) over the inner surface of the wall, heated from the outside, of the reactor by means of a device that substantially does not impede free expansion and movement/flow of the gases generated all of a sudden in the reactor.

Keeping the above in mind, we have come to the conclusion in our studies that the device used for spreading the overheated organic substance into a thin film and for conveying it in the reactor is practically in the form of a shaftless spiral. This way the installation of a shaft, e.g. a tubular shaft, presenting additional flow resistance in the internal space of the reactor is simply avoided, thus the vapor/gas fraction produced instantaneously by the flash pyrolysis of the feedstock

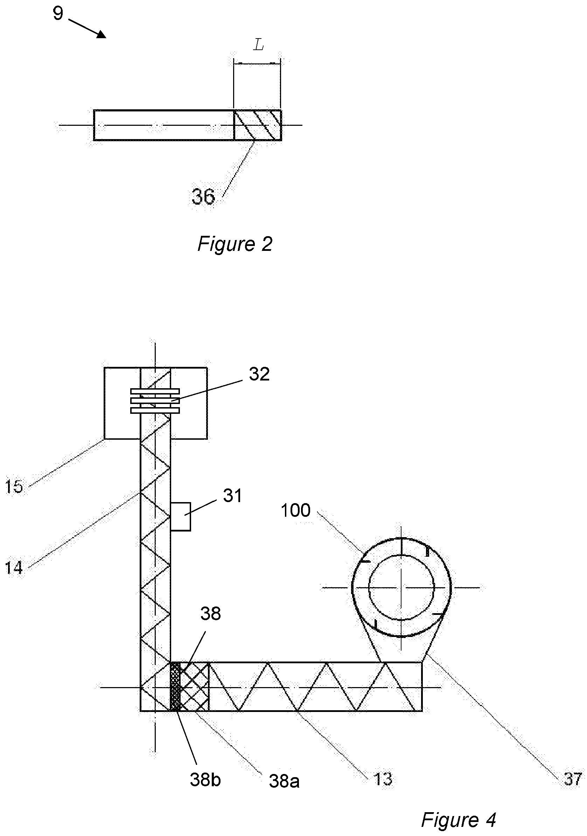

U.S. Patent No. 4123332 A teaches a process and apparatus for treating comminuted solid carbonizable material, such as comminuted municipal waste; sawdust, granulated coal, shredded tires and the like, wherein the material is caused to be pyrolyzed in a horizontally disposed elongated reaction zone essentially free of any oxygen containing gases at ambient pressure and at a temperature ranging from 400. to 900°C. The material is passed through the reaction zone by paddle-like impellers mounted on a shaft (see Figure 2) while being subject to an indirect heat transfer relationship via a burning air fuel mixture spirally swirling within a heating zone about the reaction zone and the mixture being withdrawn from a lower portion of the heating zone. During pyrolysis, the material is chemically changed into valuable gaseous, liquid and solid products.

Chinese Utility Model No. 203866250 U, regarded as the closest prior art, discloses a full-automatic self-closed flash pyrolysis reactor according to the preamble of claim 1.
can flow freely and without obstructions in the reactor space. According to our experiences, said device also allows to achieve a highly efficient hydrocarbon recovery, substantially at a rate of 100%, by forming a film from the overheated organic substance.

A reactor achieving the above objects is a flash pyrolysis reactor according to claim 1. Further preferred embodiments of the reactor according to the invention are set forth in claims 2-14.

In what follows, the invention is described in detail with reference to the accompanying drawings, wherein
- Figure 1 illustrates a flash pyrolysis reactor according to the invention together with its accessories, namely the unit providing material supply and the slag extractor;
- Figure 2 shows the last section of the unit providing material supply formed by the overheating unit connected to the flash pyrolysis reactor according to the invention in longitudinal section;
- Figure 3 shows the shaftless spiral with blades attached thereto used in the flash pyrolysis reactor illustrated on Figure 1; and
- Figure 4 illustrates an exemplary embodiment of the slag extractor performing slag extraction from the flash pyrolysis reactor according to the invention in a gas-tight manner.

The temperature of the flash pyrolysis taking place in the reactor in the case of solid phase organic feedstocks, such as mixed plastic wastes, rubber products and municipal wastes is about 500-650°C, while the processing temperature of biomasses is about 400-450°C. Biomass feedstocks reach this temperature range always in the pyrolysis reactor, wherein it enters in overheated and therefore in malleable state. The pyrolysis reactor itself is sealed in an gas-tight manner and is oxygen-free, thus combustion cannot take place therein. Overheating of mixed plastic wastes and municipal wastes is carried out at about 480°C, overheating of rubber products is carried out at about 450°C, while overheating of biomasses is carried out on at most about 350°C.

In the case of highly viscous oils, i.e. dense oils having kinematic viscosity of 800 to 1000 Poise, such as black oils or shale oils used as liquid phase feedstocks, pyrolysis results in the cracking of long carbon chains, thus low viscosity (about 80-120 Poise) crack oils are produced. The temperature of pyrolysis taking place in the reactor in the case of highly viscous oils is about 580-620°C, while their overheating preceding their entry to the reactor is carried out on about 460°C.

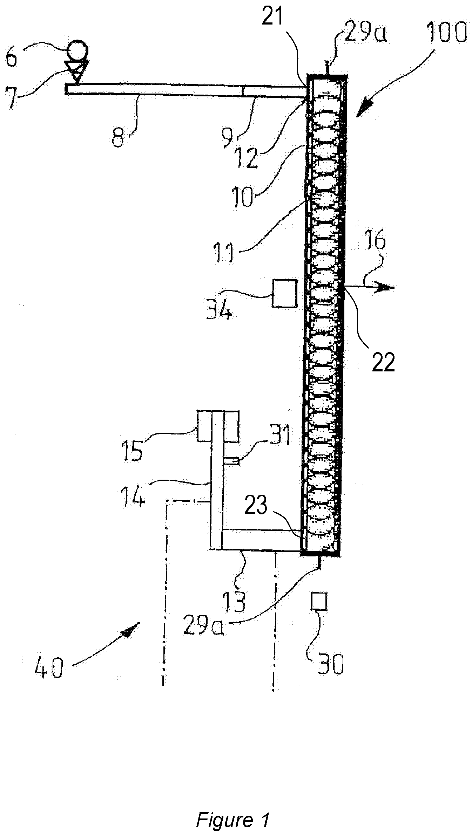

Figure 1 shows the flash pyrolysis reactor according to the invention carrying out thermal decomposition of solid phase organic feedstock at a temperature between about 500°C and 650°C, and thermal decomposition of liquid phase organic feedstock at a temperature between about 580°C and 620°C. In this case, the reactor is formed as a tubular reactor 100 with horizontal arrangement. However it is obvious to a person skilled in the art that - after the necessary modifications that can be found in the literature (e.g. regarding the supplying of feedstock) - the horizontal tubular reactor 100 may be implemented as an inclined axis tubular reactor or even as a vertical tubular reactor. The inlet 21 of the tubular reactor 100 is sealed onto the outlet of the overheating unit 9 in a gas-tight manner. The tubular reactor 100 has substantially two outlets: a first outlet 22 opening into an outlet conduit 16 for withdrawing vapor/gas fraction produced as a result of flash pyrolysis taking place in the reactor, and a second outlet 23 sealed in a gas-tight manner to the slag extractor 40 for the extraction of the remaining solid fraction produced by flash pyrolysis.

The tubular reactor 100 has a reactor body 10 formed by a cylindrical outer jacket, where the inlet 21 and the outlets 22, 23 are formed by apertures in the reactor body 10. Longitudinally opposing ends of the reactor body 10 are sealed by sealing lids, thus the tubular reactor 100 has a substantially sealed interior space. The sealing lids 42 are preferably made of stainless and/or corrosion resistant steel with high amount of alloying additions that is resistant to the chemical processes taking place in the tubular reactor 100. The first outlet 22 is formed on the reactor body 10 in a top region of the tubular reactor 100, preferably on or in the proximity of the highest portion thereof, and it is preferably in the first half of the length of the tubular reactor 100 as seen from the inlet, more preferably in its first third. The first outlet 22 is formed as a single outlet port. The second outlet 23 is formed on the reactor body 10, preferably on or in the proximity of the other end of the tubular reactor 100 opposing the inlet 21, preferably in the bottom region of the tubular reactor 100, more preferably in the lowest portion of the tubular reactor 100. Heating elements are arranged on the outer surface of the reactor body 10, that are suitable to achieve the temperature required for the decomposition of the feedstock in the reactor. In order to precisely control the heat generation, the heating elements are preferably heating elements having ceramic inserts, however the external heating of the reactor body 10 may also be provided by other means (e.g. by waste heat), as it is obvious to a person skilled in the art.

For conveying the feedstock fed into the reactor, a single conveying device provided in the form of an endless transporting element is disposed within the interior space, forming the reactor space 10a, confined by the reactor body 10 and the sealing lids 42 in a gas-tight manner and is arranged coaxially with the longitudinal axis of the reactor body 10; in a particularly preferable embodiment, the conveying device is formed by a shaftless spiral 11, which is fastened on its opposite ends to discs 29 attached to shaft axles 29a (see Figures 1A and 1B) supported by suitable bearings (not shown in the drawings). The bearings are arranged outside the reactor body 10, the shaft axles 29a exit the tubular reactor 100 through its sealing lids 42 in a manner known by a person skilled in the art e.g. through a stuffing-box, while the discs 29 are located in the reactor space 10a next to the sealing lids 42, preferable in the proximity thereof. As the presence of oxygen (and thus of air) in the reactor space 10a is highly disadvantageous according to the present invention, the sufficient sealing of the entry points of the shaft axles 29a into the reactor space is provided by the stuffing-boxes. Furthermore hydrocarbon, preferably methane detectors are built into the casing of said stuffing-boxes on both ends of the tubular reactor 100, whose sensitivity falls within the ppm range, and thus even the smallest leakage of the reactor space 10a is reliably detected. A motor 30 arranged outside the tubular reactor 100 connected to one of the shaft axles 29a through suitable transmissions drives the shaftless spiral 11 and conveys thus the feedstock in the tubular reactor 100 from inlet 21 to outlets 22, 23. Said motor 30 is preferably a speed-controlled electric motor capable of driving said shaftless spiral 11 at low rotational speeds, preferably at the speed of 1 to 20 rpm, more preferably 2 to 15 rpm.

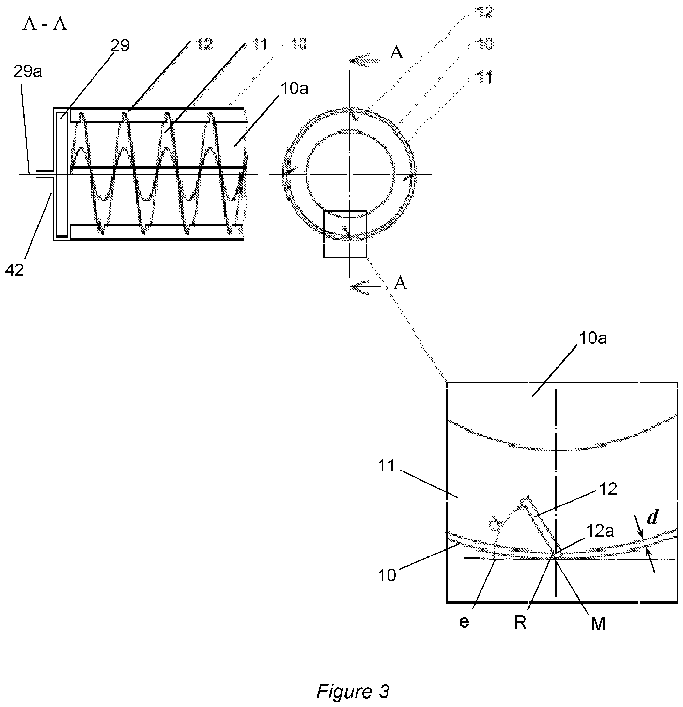

As shown in Figure 3, there are preferably 2 to 12 pieces, more preferably 4 to 8 pieces of blades 12 attached, preferably welded onto the shaftless spiral 11 in attachment points *R* along the full length of the shaftless spiral 11 in a substantially uniform angular displacement to one another in such a way that said blades 12 extend from the shaftless spiral 11 into the gap with a width *d* that locates between the outer edge of the shaftless spiral 11 and the inner surface of the reactor body 10; here, the magnitude of *d* is a few millimeters, preferably about 3 mm, but at most 5 mm. Contrary to present practice, the blades 12 are attached to the shaftless spiral 11 in such orientation, that the blades are inclined at an angle α (angle of incidence) to lines e tangential to the reactor body 10 at the points of intersection *M* of the reactor body 10 and the radiuses of the reactor body 10 passing through the attachment points *R*. The angle α is preferably at least 45°and at most 70°, more preferably at least 50°and at most 65°, most preferably about 60°±2°. According to our experiences in or studies, the inclined blades are particularly advantageous during the removal of slag to keep the slag particles on or close to the inner surface of the reactor body 10, because the inclined blades 12 present an obstacle for the slag particles to prevent their upward flow along with the vapors/gases during the material transport carried out by the shaftless spiral 11. As a result, a high majority of the slag with high coke content created during flash pyrolysis is removed from the tubular reactor 100 by the shaftless spiral 11.

The distance of the outer edges 12a of the blades 12 and the inner heat transferring surface of the reactor body 10 is preferably at most 4 mm, more preferably 2-3 mm. The function of the blades 12 is the spreading of the overheated, melted, partially vapor phase feedstock entering the tubular reactor 100 onto the inner surface of the reactor body in the form of a 0.5 to 3 mm, preferably 1 to 2 mm thick film, while the feedstock advances in the tubular reactor 100. As it is obvious, the advancement of the feedstock is caused by the rotation of the shaftless spiral 11. As the final heat transferring surface is the reactor body 10 of the tubular reactor 100, the feedstock spread in a thin film thereto is instantaneously transformed into vapor/gas, i.e. flash pyrolysis takes place in the reactor space 10a. Or putting this another way, the blades 12 provide an increase in the heat transfer coefficient between the reactor body 10 and the feedstock by the film formation during the operation of the tubular reactor 100. As a result of the inclination of the blades 12, an angular range of about 300° of the inner heat transfer surface of the reactor body 10 may be used for film formation. A further function of the blades 12 - besides film formation - is the continuous cleaning of the full length of the inner surface of the reactor body 10, thus preventing feedstock from burning onto and sticking thereto, and thereby preventing overheating of the reactor body 10 in spots.

Above the previously mentioned functions, the blades 12 also serve for the mechanical strengthening/stabilization of the shaftless spiral 11 having a large longitudinal extent. It is hereby noted that the slag with high coke content to be removed by the shaftless spiral 11 in the tubular reactor 100 according to the invention also provides lubrication during removal between the blades 12 and the inner surface of the reactor body 10, thus reduces the wear of the longitudinally bending shaftless spiral 11, the blades 12 attached thereto and the inner surface of the reactor body 10, thus it contributes to the extension of the life span of the flash pyrolysis reactor according to the invention and its components.

The longitudinal extension (length) of the tubular reactor 100 being a preferred embodiment of the flash pyrolysis reactor according to the invention, and thus of the reactor body 10 is preferably about 6000 mm, while its (i.e. of the internal space of the reactor) internal diameter is about 500 mm. The cross-sectional outer diameter of the straight shaftless spiral 11 is at least about 490 mm, more preferably 494 mm, while its internal diameter is between 380 mm and 434 mm, more preferably between 380 mm and 400 mm. An advantage of using the shaftless spiral 11 as material transporting conveyor is that the quite large volume of gases/vapors suddenly released by the instantaneous decomposition of feedstocks fed into the tubular reactor 100 and spread onto the inner surface of the reactor body 10 by blades 12 as a thin film can flow freely and - in the absence of an inner axis - without obstruction in the full volume of the reactor space 10a, thus they do not apply local load on the shaftless spiral 11 when released.

The ability of a conveying element used in the flash pyrolysis reactor to affect an unobstructed free vapor/gas flow within the reactor can be characterized by the so-called transmission coefficient. This measure can be defined as the ratio of the (free) area of said conveying element available in the reactor in a cross-section perpendicular to a longitudinal axis of the reactor body for gases/vapors generated within the reactor to freely flow and the total cross-sectional area of the tubular reactor. With the aforementioned design of the tubular reactor 100 and the shaftless spiral 11, the value of said transmission coefficient is at least about 0.6, i.e. at least about 60% of the cross-sectional area in the reactor according to the invention is available for the unobstructed expansion and free flow of gases/vapors generated instantaneously in the reactor. This value can be increased by reducing the cross-sectional area of the shaftless spiral 11, while maintaining the gap between the inner wall of the tubular reactor 100 and the outer edge of the shaftless spiral 11 at a given value for the film formation. With the aforementioned design of the tubular reactor 100 and the shaftless spiral 11, the value of the transmission coefficient can be as high as 0.78. Consequently, as much as 78% of the cross-sectional area of the reactor according to the invention is available for the gases/vapors produced instantaneously to expand and flow freely in the reactor, which is particularly preferred. In the case of the reactor according to the invention, said transmission coefficient can be set to any value in the range of 0.6 to 0.78 by suitably choosing the geometric parameters of the shaftless spiral 11 while the inner diameter of the reactor has got a fixed value. As reduction in the cross-sectional area of the shaftless spiral 11 is achieved in practice by decreasing the cross-sectional (annular) width of the shaftless spiral, strengthening/reinforcing function of the blades 12 is particularly advantageous for the shaftless spiral 11, because said blades 12 bear part of the load exerted to the shaftless spiral 11 during operation of the flash pyrolysis reactor according to the invention and thus partially relieve the shaftless spiral 11 of the load. It is obvious to a person skilled in the art, that the aforementioned values of the transmission coefficient characterizing the reactor and preferred in terms of flash pyrolysis can also be achieved by further geometric arrangements differing from the construction described herein.

Furthermore the flash pyrolysis reactor according to the invention further comprises an inert gas safety unit 34, which is operated in case of a critical failure (severe technical accident) and instantly stops the thermochemical process by flooding the reactor space 10a with inert gas. The details and operation of the safety unit 34 are known to a person skilled in the art, thus these are not discussed further herein.

In the case of using a tubular reactor 100 with the aforementioned parameters, thermal decomposition capacity of the flash pyrolysis reactor according to the invention will be about 250 kg/hour, more preferably, depending on the feedstock, at most 300 kg/hour. The shaftless spiral 11 is operated at low speed, said speed is preferably 1 to 20 rpm, more preferably 2 to 15 rpm.

It is a known fact, that one of the requirements of achieving perfect flash pyrolysis in a reactor is the oxygen-free environment, i.e. the displacement and/or sealing out of atmospheric air from the reactor space 10a as perfectly as possible. This has to be fulfilled both at the entry of feedstocks into the tubular reactor 100 and at the exit of vapor/gas and solid phase fractions from the reactor space 10a. Maintaining oxygen-free environment may be ensured by using suitable accessories together with the tubular reactor 100, for example in accordance with the following.

An outlet of an overheating unit 9 is connected to the inlet of the flash pyrolysis reactor according to the invention preferably formed by a tubular reactor 100. A preferable embodiment of the overheating unit 9 is illustrated in Figure 2.

An inlet of the slag extractor 40 is connected to the second outlet of the flash pyrolysis reactor according to the invention preferably formed by a tubular reactor 100 serving for the extraction of solid phase fraction (slag with high coke content). A preferable embodiment of the slag extractor 40 is shown in Figure 4.

As shown in Figure 1, the suitably prepared (dried and air-deprived) solid phase organic feedstock to be processed is introduced to a tapering cramming screw 7 through a drum-type feeder 6, which feeds the inhomogeneous feedstock into the screw-type feeding unit 8 at a constant rate. If the feedstock to be processed is formed by the aforementioned liquid phase organic substance (highly viscous oil), the feeding of feedstock into the tapering cramming crew 7 is carried out by a gear screw 6' (not shown on the drawing) having heated jacket space instead of the drum-type feeder 6. The screw-type feeding unit 8 feeds the feedstock into the overheating unit 9, from there the feedstock enters the tubular reactor 100 at a high temperature. The feeding is carried out while forming a plug. To this end, the screw of the screw-type feeding unit 8 is somewhat shorter than the jacket space of the screw-type feeding unit 8, thus the feedstock is compressed directly before being fed into the overheating unit 9 and thus prevents air from entering the overheating unit 9 and from there to the tubular reactor 100. The extent of the compression of the feedstock is determined empirically and the screw of the screw-type feeding unit 8 is sized accordingly. For the continuous preheating of the feedstock, the screw-type feeding unit 8 is practically divided into at least two, preferably three or four zones with different temperatures. The function of the screw-type feeding unit 8 is the heating/melting and meanwhile feeding of feedstocks into the overheating unit 9. Accordingly, the compression ratio of the screw-type feeding unit 8 is relatively low, preferably only 1.5 to 1.7, however this is sufficient to prevent flow-back of material.

In the overheating unit 9 illustrated in Figure 2, the feedstocks are partially transformed into vapor/gas phase and are subsequently introduced into the reactor space 10a through the inlet 21 of the tubular reactor 100. An *L* length portion of the end of the overheating unit 9 connected to the tubular reactor 100 is formed by a helical element 36, whose length is preferably about 30-40% of the total length of the overheating unit 9. The helical element 36 forces the feedstock stream flowing through it to a helical flow path. As a result of the multiple phase changes, the flow rate increase and the angular momentum generated in the feedstock stream by the helical element 36 at the output of the overheating unit 9, a mixed phase medium comprising a mix of vapor/gas, liquid and solid phases having turbulent flow enters the tubular reactor 100 and impacts on the reactor body 10 (the inner wall) of the tubular reactor 100 connected to the overheating unit substantially perpendicularly, and is spread to a thin film thereon as a result of the mechanical film formation carried out by the rotating shaftless spiral 11, and while advanced by the shaftless spiral 11 in a manner described hereinbefore it is subjected to instantaneous thermal decomposition according to the following.

When the reactor according to the invention is in operation, the thin film of the organic feedstock spread onto the inner surface of the tubular reactor 100 instantly absorbs heat supplied by the heating elements into the reactor space 10a through the reactor body 10 and decomposes into three fractions. The three fractions comprise vapor, gas, and solid fractions. The ratio of the three fractions depends on the material properties of the feedstock. The mixed phase comprised of vapor/gas leaves the reactor space 10a through the outlet conduit 16 connected to the first outlet 22 of the tubular reactor 100 for further use. The outlet 22 and the outlet conduit 16 have got substantially the same diameter as the inner diameter of the shaftless spiral 11, thus no change in the volume flow rate practically occurs when the mixed fraction leaves the tubular reactor 100.

Figure 4 illustrates the slag extractor 40 that maintains oxygen-free environment within the flash pyrolysis reactor according to the invention even in case of a continuous operation, wherein expelling air and preventing a leakage of residual hydrocarbons are ensured specifically by means of cooperating discharge screw conveyors 13, 14. As methane is the lowest molecular weight component of the gases produced in the tubular reactor 100, leakage monitoring is preferably performed by methane detectors 31. The methane detectors 31 applied may detect the escaping gas in ppm amounts, that pose neither health nor fire related hazards, but are enough to provide a chance for timely intervening based on the signals provided by said methane detector(s) 31 in case of a defect in/failure of gas-tightness.

At the point where the solid phase is led out from the tubular reactor 100, gas-tightness is ensured by directing the solid phase (slag with high coke content) leaving the tubular reactor via the second outlet of the tubular reactor 100 by means of a tapered fitting piece 37 into the first (horizontal axis) discharge screw conveyor 13 having a cooled jacket space and discharge screw. The second discharge screw conveyor 14 is connected to the first discharge screw conveyor 13 substantially perpendicularly. In this case, for the sake of simplicity, preferably only the jacket space of the second discharge screw conveyor 14 is cooled. The discharge screw of the first discharge screw conveyor 13 is shorter than the jacket space of the first discharge screw conveyor 13 by a certain length, preferably by at least 150 mm, more preferably by at least 175 mm, and even more preferably by about 200 mm. Therefore, as a result of the compression and thus the continuous compaction of slag at the point where the two discharge screw conveyors 13, 14 meet when said first discharge screw conveyor 13 operates, a plug 38 of slag resulting in a resilient gas-tight sealing element forms from the powdered slag to be extracted by said discharge screw conveyor 13 in such a manner, that part 38a of the plug 38 of slag contacts the discharge screw of the first discharge screw conveyor 13, while part 38b of the plug 38 of slag contacts the discharge screw of the second discharge screw conveyor 14. The plug 38 of slag is at least 150 mm, preferably about 200 mm in length. As the first discharge screw conveyor 13 operates continuously, a continuously increasing amount of slag extracted by said first discharge screw conveyor 13 is getting compacted and pressed against the discharge screw of the second discharge screw conveyor. Hence, the extent of compaction and pressure within the plug 38 of slag at the discharge screw of the second discharge screw conveyor 14 becomes higher and higher, and therefore an increase in torque occurs for the first discharge screw conveyor 13. The control unit of the electric motor driving the first discharge screw conveyor 13 detects the thus increased power requirement. As soon as the power requirement/torque increase exceeds a preset threshold value, the second discharge screw conveyor 14 comes into operation, mills off a part of the slag from the part 38b of the plug 38 of slag and then conveys the slag material milled off to a slag collecting container 15 disposed at the free end of the second discharge screw conveyor 14. When the power requirement/increase in torque drops below a certain preset value, the operation of the second discharge screw conveyor 14 is suspended. Due to the cooperation of the two discharge screw conveyors 13, 14, the plug 38 of slag is continuously present in the extraction path between the discharge screws (i.e. it is built from one end thereof, and eroded from the other one). As a consequence of operating said second discharge screw conveyor 14 on a power requirement/increase in torque basis, the plug 38 of slag maintains dimensions that provide gas-tightness at all times.

To avoid self-combustion, the slag that has been milled off is introduced into the slag collecting container 15 at a temperature of about 80°C. This is ensured by an intensive cooling of the discharge screw conveyers 13, 14. The cooling (represented by dotted-dashed lines in the drawing) of said conveyors 13, 14, i.e. their respective parts, is provided by an external cooling unit 33, in the cooling circuit of which preferably water is circulated to the discharge screw conveyors 13, 14 as the cooling medium. The slag collecting container 15 and the second discharge screw conveyor 14 is connected to each other through a gas-tight sealing, provided in the form of e.g. one or more interposed rubber sealing elements.

It is noted that the particle size and particle size distribution of the extracted slag can be continuously monitored at the outlet of the slag extractor 140. To study the particle size and its distribution, particle size sensors 32 can be arranged in or above the slag collecting container 15, which can continuously collect particle size related data in relation to the slag with high coke content extracted from the flash pyrolysis reactor according to the invention. Preferably, the particle size sensors 32 are optical sensors, however, other types of particle size sensors can also be used. The measured particle size and particle size distribution of the slag can be used to qualify the course of thermal decomposition performed in the flash pyrolysis reactor according to the invention.

## Claims

1. A flash pyrolysis reactor to thermally decompose a feedstock provided in the form of an organic substance, comprising
- a reactor body (10) enclosing a closed reactor space (10a), said reactor body extending longitudinally and having a cylindrical inner wall sealed air-tightly by a closing lid (42) at each of its opposing ends;
- an inlet (21) for introducing feedstock into the reactor space (10a);
- a first outlet (22) for withdrawing vapor/gas fraction from the reactor space (1 0a);
- a second outlet (23) for withdrawing solid fraction (10a) from the reactor space (10a);
wherein the inlet (21) and the outlets (22, 23) are in the form of sealed apertures of the reactor body (10), the inlet (21) is located at one end of the reactor body (10), the second outlet is located at the opposite end of the reactor body (10);
- a conveying element for transporting feedstock from the inlet (21) toward the outlet (23), said conveying element is supported by bearings in the reactor space (10a) coaxially to the longitudinal axis of the reactor body (10), is arranged with certain spacing apart from the inner wall and extends along full length of the reactor space (10a), said conveying element is equipped with electric driving means and has a region extending along the inner wall which is configured to perform mechanical film formation, ***characterized in that***
the conveying element is a shaftless spiral (11) and said region of the conveying element is formed by blades (12) extending along the full length of the shaftless spiral (11) and attached to the circumference of the shaftless spiral (11) at attachment points (R), wherein each blade (12) extends towards the inner wall of the reactor body (10) into a spacing of a few millimeters, at most 5 mm, which separates the shaftless spiral (11) and the inner wall, thereby providing a film forming gap for the mechanical film formation smaller than the size of said spacing, wherein
the conveying element is **characterized by** a transmission coefficient with a value of at least 0.6, said transmission coefficient measures the ability of the conveying element in affecting unobstructed vapor/gas flow within the reactor, in use, said transmission coefficient being defined as a ratio of the area of said conveying element unobstructed in a cross-section perpendicular to the longitudinal axis of the reactor body (10) and the total cross-sectional area of said reactor space (10a).

2. The reactor according claim 1, wherein the first outlet (22) is formed on the reactor body (10) in a top region of the reactor space (10a) and within first half of the full length of the reactor space (10) measured from the inlet (21).

3. The reactor according claim 2, wherein the first outlet (22) is formed on the reactor body (10) at the highest portion of the reactor space (10a).

4. The reactor according claim 2 or 3, wherein the first outlet (22) is formed on the reactor body (10) in the first third of the full length of the reactor space (10) measured from the inlet (21).

5. The reactor according any one of claims 1 to 4, wherein the electric driving means is a speed-controlled electric motor (30) arranged outside the reactor body (10) configured for driving at the speed of 1 to 20 rpm, said driving means is in driving connection with one of the shaft axles (29a) passing through the closing lids (42), airtightly, supported by said bearings and attached to discs (29) arranged on the opposite ends of the conveying element.

6. The reactor according to any one of claims 1 to 5, wherein the blades (12) are arranged with substantially uniform angular displacement to one another, and the blades (12) are inclined at an angle (α) to lines (e) tangential to the reactor body (10) at the points of intersection (M) of the reactor body (10) and the radii of the reactor body (10) passing through said attachment points (R).

7. The reactor according claim 6, wherein the inclination angle (α) of the blades is preferably at least 45° and at most 70°, more preferably at least 50° and at most 65°, most preferably about 60°±2°.

8. The reactor according any one of claims 6 to 7, wherein the number of the blades is between two and twelve.

9. The reactor according claim 8, wherein the number of the blades is between four and eight.

10. The reactor according any one of claims 1 to 9, wherein a screw-type feeding unit (8) is connected gas-tightly to the inlet (21) through an interposed overheating unit (9), said screw-type feeding unit (8) being divided into at least two zones heatable to different temperatures for achieving at least partial melting of the feedstock.

11. The reactor according claim 10, wherein - depending on the material characteristics of the feedstock - one of a drum-type feeder (6) and a gear pump with heated jacket space is connected to the inlet of the screw-type feeding unit (8).

12. The reactor according any one of claims 1 to 11, wherein a screw-type extraction mechanism is connected air-tightly to the second outlet (23) so as to extract a solid fraction along an extraction path, said screw-type extraction mechanism is configured to form a sealing element from said solid fraction to maintain continuous gas-tight sealing in the extraction path when the reactor is in operation.

13. The reactor according claim 12, wherein the screw-type extraction mechanism is provided by first and second discharge screw conveyors (13, 14) connected to each other substantially perpendicularly, wherein an entry side of said first discharge screw conveyor (13) is connected airtightly to the second outlet (23), and an exit side of said second discharge screw conveyor (14) opens airtightly into a slag collecting container (15), and an exit side of said first discharge screw conveyor (13) is connected to an entry side of said second discharge screw conveyor (14) through a sealing element that is formed from said solid fraction when the reactor is in operation.

14. The reactor according any one of claims 1 to 13, wherein the reactor body (10) is configured as a heat transfer surface to be heated from the outer side thereof.

## Patentansprüche

1. Flash-Pyrolysereaktor zur thermischen Zersetzung eines in Form einer organischen Substanz bereitgestellten Ausgangsmaterials, umfassend
- einen Reaktorkörper (10), der einen geschlossenen Reaktorraum (10a) umschließt, wobei sich der Reaktorkörper in Längsrichtung erstreckt und eine zylindrische Innenwand aufweist, die an jedem ihrer gegenüberliegenden Enden durch einen Verschlussdeckel (42) luftdicht verschlossen ist;
- einen Einlass (21) zum Einführen von Ausgangsmaterial in den Reaktorraum (10a);
- einen ersten Auslass (22) zur Entnahme eines Dampf-/Gasanteils aus dem Reaktorraum (10a);
- einen zweiten Auslass (23) zur Entnahme eines Feststoffanteils (10a) aus dem Reaktorraum (10a);
wobei der Einlass (21) und die Auslässe (22, 23) in Form von abgedichteten Öffnungen des Reaktorkörpers (10) ausgebildet sind, der Einlass (21) an einem Ende des Reaktorkörpers (10) angeordnet ist, der zweite Auslass am gegenüberliegenden Ende des Reaktorkörpers (10) angeordnet ist;
- ein Förderelement zum Transportieren von Ausgangsmaterial vom Einlass (21) zum Auslass (23), wobei das Förderelement durch Lager im Reaktorraum (10a) koaxial zur Längsachse des Reaktorkörpers (10) getragen wird, mit einem bestimmten Abstand von der Innenwand eingerichtet ist und sich über die gesamte Länge des Reaktorraums (10a) erstreckt, das Förderelement mit elektrischem Antriebsmittel ausgestattet ist und einen sich entlang der Innenwand erstreckenden Bereich aufweist, der zur Durchführung einer mechanischen Filmbildung ausgelegt ist, **dadurch gekennzeichnet, dass**
das Förderelement eine achsenlose Spirale (11) ist und der Bereich des Förderelements durch Blätter (12) gebildet wird, die sich über die gesamte Länge der achsenlosen Spirale (11) erstrecken und am Umfang der achsenlosen Spirale (11) an Befestigungspunkten (R) angebracht sind, wobei sich jedes Blatt (12) in Richtung der Innenwand des Reaktorkörpers (10) in einen Abstand von wenigen Millimetern, höchstens 5 mm, erstreckt, der die achsenlose Spirale (11) und die Innenwand trennt, wodurch ein filmbildender Spalt für die mechanische Filmbildung bereitgestellt wird, der kleiner ist als die Größe des Abstands, wobei
das Förderelement durch einen Übertragungskoeffizienten mit einem Wert von mindestens 0,6 gekennzeichnet ist, wobei der Übertragungskoeffizient die Fähigkeit des Förderelements misst, den ungehinderten Dampf-/Gasstrom innerhalb des Reaktors bei Verwendung zu beeinflussen, wobei der Übertragungskoeffizient als ein Verhältnis der Fläche des Förderelements, die in einem Querschnitt senkrecht zur Längsachse des Reaktorkörpers (10) ungehindert ist, und des gesamten Querschnittsbereichs des Reaktorraums (10a) definiert ist.

2. Reaktor nach Anspruch 1, wobei der erste Auslass (22) auf dem Reaktorkörper (10) in einem oberen Bereich des Reaktorraums (10a) und innerhalb der ersten Hälfte der gesamten Länge des Reaktorraums (10), gemessen vom Einlass (21), ausgebildet ist.

3. Reaktor nach Anspruch 2, wobei der erste Auslass (22) am Reaktorkörper (10) am höchsten Abschnitt des Reaktorraums (10a) ausgebildet ist.

4. Reaktor nach Anspruch 2 oder 3, wobei der erste Auslass (22) am Reaktorkörper (10) im ersten Drittel der gesamten Länge des Reaktorraums (10), gemessen vom Einlass (21), ausgebildet ist.

5. Reaktor nach einem der Ansprüche 1 bis 4, wobei es sich bei dem elektrischen Antriebsmittel um einen drehzahlgeregelten Elektromotor (30) handelt, der außerhalb des Reaktorkörpers (10) eingerichtet und für den Antrieb mit einer Drehzahl von 1 bis 20 U/min ausgelegt ist, wobei das Antriebsmittel in Antriebsverbindung mit einer der Wellenachsen (29a) steht, die, durch die Verschlussdeckel (42) verlaufen, luftdicht, von den Lagern getragen und an Scheiben (29) befestigt sind, die an den gegenüberliegenden Enden des Förderelements eingerichtet sind.

6. Reaktor nach einem der Ansprüche 1 bis 5, wobei die Blätter (12) mit im Wesentlichen gleichmäßiger Winkelversetzung zueinander eingerichtet sind, und die Blätter (12) in einem Winkel (α) zu Linien (e) geneigt sind, die an den Schnittpunkten (M) des Reaktorkörpers (10) und der Radien des Reaktorkörpers (10), die durch die Befestigungspunkte (R) verlaufen, zum Reaktorkörper (10) tangential sind.

7. Reaktor nach Anspruch 6, wobei der Neigungswinkel (α) der Blätter vorzugsweise mindestens 45° und höchstens 70°, bevorzugter mindestens 50° und höchstens 65°, besonders bevorzugt etwa 60° ± 2° beträgt.

8. Reaktor nach einem der Ansprüche 6 bis 7, wobei die Anzahl der Blätter zwischen zwei und zwölf beträgt.

9. Reaktor nach Anspruch 8, wobei die Anzahl der Blätter zwischen vier und acht beträgt.

10. Reaktor nach einem der Ansprüche 1 bis 9, wobei eine Schraubentyp-Zuführeinheit (8) durch eine dazwischenliegende Überhitzungseinheit (9) gasdicht mit dem Einlass (21) verbunden ist, wobei die Schraubentyp-Zuführeinheit (8) in mindestens zwei Zonen unterteilt ist, die auf unterschiedliche Temperaturen beheizbar sind, um ein zumindest teilweises Schmelzen des Ausgangsmaterials zu erreichen.

11. Reaktor nach Anspruch 10, wobei - in Abhängigkeit von den Materialeigenschaften des Ausgangsmaterials - entweder eine Trommeltyp-Zuführung (6) oder eine Zahnradpumpe mit erhitztem Mantelraum mit dem Einlass der Schraubentyp-Zuführeinheit (8) verbunden ist.

12. Reaktor nach einem der Ansprüche 1 bis 11, wobei ein Schraubentyp-Extraktionsmechanismus luftdicht mit dem zweiten Auslass (23) verbunden ist, um einen Feststoffanteil entlang eines Extraktionspfads zu extrahieren, wobei der Schraubentyp-Extraktionsmechanismus so ausgelegt ist, dass er ein Dichtungselement aus dem Feststoffanteil bildet, um eine kontinuierliche gasdichte Abdichtung im Extraktionspfad aufrechtzuerhalten, wenn der Reaktor in Betrieb ist.

13. Reaktor nach Anspruch 12, wobei der Schraubentyp-Extraktionsmechanismus durch erste und zweite Austragsschnecken (13, 14) bereitgestellt wird, die im Wesentlichen senkrecht miteinander verbunden sind, wobei eine Eintrittsseite der ersten Austragsschnecke (13) luftdicht mit dem zweiten Auslass (23) verbunden ist, und eine Austrittsseite der zweiten Austragsschnecke (14) luftdicht in einen Schlackensammelbehälter (15) mündet, und eine Austrittsseite der ersten Austragsschnecke (13) mit einer Eintrittsseite der zweiten Austragsschnecke (14) durch ein Dichtungselement verbunden ist, das aus dem Feststoffanteil gebildet wird, wenn der Reaktor in Betrieb ist.

14. Reaktor nach einem der Ansprüche 1 bis 13, wobei der Reaktorkörper (10) als Wärmeübertragungsfläche ausgelegt ist, die von der Außenseite her beheizt wird.

## Revendications

1. Réacteur de pyrolyse flash pour décomposer thermiquement une charge d'alimentation fournie sous la forme d'une substance organique, comprenant
- un corps de réacteur (10) enfermant un espace de réacteur fermé (10a), ledit corps de réacteur s'étendant longitudinalement et présentant une paroi intérieure cylindrique scellée de manière étanche à l'air par un couvercle de fermeture (42) au niveau de chacune de ses extrémités opposées ;
- une entrée (21) pour l'introduction de la charge d'alimentation dans l'espace de réacteur (10a) ;
- une première sortie (22) pour le retrait d'une fraction de vapeur/de gaz de l'espace de réacteur (10a) ;
- une seconde sortie (23) pour le retrait d'une fraction solide (10a) de l'espace de réacteur (10a) ;
dans lequel l'entrée (21) et les sorties (22, 23) sont sous la forme d'ouvertures scellées du corps de réacteur (10), l'entrée (21) est située à une extrémité du corps de réacteur (10), la seconde sortie est située à l'extrémité opposée du corps de réacteur (10) ;
- un élément de transport pour le transport de la charge d'alimentation de l'entrée (21) vers la sortie (23), ledit élément de transport est supporté par des paliers dans l'espace de réacteur (10a) coaxialement à l'axe longitudinal du corps de réacteur (10), est agencé avec un certain espacement loin de la paroi intérieure et s'étend le long de la longueur entière de l'espace de réacteur (10a), ledit élément de transport est équipé d'un moyen de pilotage électronique et présente une région s'étendant le long de la paroi intérieure qui est configurée pour réaliser une formation de film mécanique, **caractérisé en ce que**
l'élément de transport est une spirale sans arbre (11) et ladite région de l'élément de transport est formée par des pales (12) s'étendant le long de la longueur entière de la spirale sans arbre (11) et attachée à la circonférence de la spirale sans arbre (11) aux points d'attache (R), dans lequel chaque pale (12) s'étend vers la paroi intérieure du corps de réacteur (10) dans un espacement de quelques millimètres, au plus 5 mm, qui sépare la spirale sans arbre (11) et la paroi intérieure, fournissant ainsi une fente formant film pour la formation de film mécanique plus petite que la taille dudit espacement, dans lequel
l'élément de transport est **caractérisé par** un coefficient de transmission avec une valeur d'au moins 0,6, ledit coefficient de transmission mesure l'aptitude de l'élément de transport à altérer un flux de vapeur/de gaz non obstrué dans le réacteur, en utilisation, ledit coefficient de transmission étant défini comme un rapport de la zone dudit élément de transport non obstrué dans une section transversale perpendiculaire à l'axe longitudinal du corps de réacteur (10) et la superficie de section totale dudit espace de réacteur (10a).

2. Réacteur selon la revendication 1, dans lequel la première sortie (22) est formée sur le corps de réacteur (10) dans une région supérieure de l'espace de réacteur (10a) et dans la première moitié de la longueur entière de l'espace de réacteur (10) mesuré depuis l'entrée (21).

3. Réacteur selon la revendication 2, dans lequel la première sortie (22) est formée sur le corps de réacteur (10) au niveau de la portion la plus haute de l'espace de réacteur (10a).

4. Réacteur selon la revendication 2 ou 3, dans lequel la première sortie (22) est formée sur le corps de réacteur (10) dans le premier tiers de la longueur entière de l'espace de réacteur (10) mesuré depuis l'entrée (21).

5. Réacteur selon l'une quelconque des revendications 1 à 4, dans lequel le moyen de pilotage électrique est un moteur électrique commandé par la vitesse (30) agencé en dehors du corps de réacteur (10) configuré pour le pilotage à la vitesse de 1 à 20 tr/min, ledit moyen de pilotage est en liaison de pilotage avec un des essieux d'arbre (29a) passant à travers les couvercles de fermeture (42), supporté, de manière étanche à l'air, par lesdits paliers et attaché aux disques (29) agencés sur les extrémités opposées de l'élément de transport.

6. Réacteur selon l'une quelconque des revendications 1 à 5, dans lequel les pales (12) sont agencées avec un déplacement angulaire sensiblement uniforme les unes par rapport aux autres, et les pales (12) sont inclinées à un angle (α) par rapport aux lignes (e) tangentielles au corps de réacteur (10) aux points d'intersection (M) du corps de réacteur (10) et aux rayons du corps de réacteur (10) passant à travers lesdits points d'attache (R).

7. Réacteur selon la revendication 6, dans lequel l'angle d'inclinaison (α) des pales est de préférence au moins de 45° et au plus de 70°, plus préférentiellement au moins de 50° et au plus de 65°, le plus préférentiellement d'environ 60°±2°.

8. Réacteur selon l'une quelconque des revendications 6 à 7, dans lequel le nombre de pales est entre deux et douze.

9. Réacteur selon la revendication 8, dans lequel le nombre de pales est entre quatre et huit.

10. Réacteur selon l'une quelconque des revendications 1 à 9, dans lequel une unité d'alimentation à vis (8) est reliée de manière étanche au gaz à l'entrée (21) à travers une unité de surchauffe (9) interposée, ladite unité d'alimentation à vis (8) étant divisée en au moins deux zones chauffables à différentes températures pour atteindre une fusion au moins partielle de la charge d'alimentation.

11. Réacteur selon la revendication 10, dans lequel - selon les caractéristiques de matériau de la charge d'alimentation - un d'un chargeur à tambour (6) et d'une pompe à engrenages avec un espace de chemise chauffée est relié à l'entrée de l'unité d'alimentation à vis (8).

12. Réacteur selon l'une quelconque des revendications 1 à 11, dans lequel un mécanisme d'extraction à vis est relié de manière étanche à l'air à la seconde sortie (23) de sorte à extraire une fraction solide le long d'une voie d'extraction, ledit mécanisme d'extraction à vis est configuré pour former un élément étanche à partir de ladite fraction solide pour maintenir un scellage étanche au gaz continu dans la voie d'extraction lorsque le réacteur est en fonctionnement.

13. Réacteur selon la revendication 12, dans lequel le mécanisme d'extraction à vis est fourni par des premier et second transporteurs à vis de décharge (13, 14) reliés l'un à l'autre sensiblement perpendiculairement, dans lequel un côté d'entrée dudit premier transporteur à vis de décharge (13) est relié de manière étanche à l'air à la seconde sortie (23), et un côté de sortie dudit second transporteur à vis de décharge (14) ouvre de manière étanche à l'air dans un contenant de collecte de scorie (15), et un côté de sortie dudit premier transporteur à vis de décharge (13) est relié à un côté d'entrée dudit second transporteur à vis de décharge (14) à travers un élément étanche qui est formé à partir de ladite fraction solide lorsque le réacteur est en fonctionnement.

14. Réacteur selon l'une quelconque des revendications 1 à 13, dans lequel le corps de réacteur (10) est configuré comme une surface de transfert de chaleur à chauffer depuis son côté extérieur.
